# FASCICULE DE BREVET EUROPEEN

(11) **EP 0 951 825 B1**
(45) Date de publication et mention de la délivrance du brevet: **22.01.2003**
(21) Numéro de dépôt: 99460025.2
(22) Date de dépôt: 20.04.1999
(51) Int. Cl.: A01K 39/012

(54) **Mangeoire pour volailles, utilisée notamment dans une installation d'alimentation de vollailes**
Geflügelfütterer, insbesondere zur Anwendung in einer Geflügelfütterungsanlage
Poultry feeder, particularly for use in a poultry feeding installation

(30) Priorité: 22.04.1998 FR 9805335
(43) Date de publication de la demande: 27.10.1999
(73) Titulaire: Plouzen, Philippe, 29250 Sibiril (FR)
(72) Inventeur: Plouzen, Philippe, 29250 Sibiril (FR)
(74) Mandataire: Maillet, Alain

(56) Documents cités:
- FR-A- 2 678 480
- FR-A- 2 680 949
- US-A- 2 735 402

## Description

La présente invention concerne une mangeoire pour volailles, utilisée notamment dans une installation d'alimentation de volailles.

Une telle installation est généralement constituée d'un système de distribution d'aliments sur lequel sont reliées les extrémités de transporteurs à vis sans fin contenus dans des tubes de grande longueur. Régulièrement espacées le long de chaque transporteur, on trouve une pluralité de mangeoires reliées au transporteur correspondant. Les aliments transportés par chaque tube sont acheminés vers les mangeoires dans lesquelles ils se déversent de manière à les remplir.

Une mangeoire du type de celles qui sont généralement utilisées dans une installation de distribution est, par exemple, décrite dans le document de brevet EP-A-68 023. Elle est essentiellement composée d'une assiette circulaire aux bords relevés et fixée, au moyen de tiges, à une couronne solidaire du tube d'alimentation. Un système d'alimentation réglable en hauteur est prévu pour le remplissage de l'assiette à partir du tube d'alimentation.

Un inconvénient de ce type de mangeoires tient au fait qu'il n'est pas adapté à tous les âges, du poussin jusqu'au poulet. La mangeoire décrite dans le brevet susmentionné est en effet adaptée au poulet si bien que la hauteur des rebords de cette mangeoire est généralement trop élevée pour les jeunes poussins.

Le but de la présente invention est donc de proposer une mangeoire du type de celle qui vient d'être décrite, mais qui puisse être adaptée à des animaux en bas âge, ainsi qu'à des animaux adultes.

Un autre but de l'invention est de proposer une mangeoire dont la capacité en aliments puisse varier selon l'âge des animaux auxquels elle s'adresse.

A cet effet, une mangeoire selon l'invention est caractérisée en ce qu'elle comprend un réceptacle constitué de deux goulottes dont l'une est prévue pour pouvoir être logée à l'intérieur de l'autre goulotte, lesdites goulottes pouvant prendre l'une par rapport à l'autre toutes les positions relatives comprises entre une position où ladite première goulotte se trouve à l'intérieur de la seconde goulotte, le réceptacle présentant sa capacité la plus faible et une autre position où lesdites goulottes ne se chevauchent plus qu'en une zone de faible dimension, le réceptacle présentant alors sa capacité la plus élevée.

Selon une autre caractéristique de l'invention, lesdites deux goulottes, pour pouvoir prendre lesdites positions relatives, sont prévues pour pouvoir pivoter librement l'une par rapport à l'autre et indépendamment l'une de l'autre. Avantageusement, chaque goulotte présente une forme de portion de cylindre.

Selon une autre caractéristique de l'invention, elle comprend une trémie d'alimentation présentant une forme générale de V renversé pourvue à son sommet d'une ouverture par laquelle sont déversés des aliments d'un système de distribution et à sa partie inférieure, une ouverture débouchant dans le réceptacle.

Selon une autre caractéristique de l'invention, à l'intérieur de la trémie, se trouve une paroi qui présente une forme générale d'un V renversé.

Selon une autre caractéristique de l'invention, ladite mangeoire comporte un système de commande du pivotement des goulottes qui est manuel.

Selon une variante de réalisation, ladite mangeoire comporte un système de commande du pivotement des mangeoires qui est pourvu d'un câble, d'un système de renvoi fixé, d'une part, au câble et, d'autre part, aux bords extérieurs de chacune des goulottes par l'intermédiaire de tiges.

Selon une autre caractéristique de l'invention, le système de renvoi est constitué d'un premier levier pouvant pivoter par rapport à un axe et de deux leviers solidaires de l'axe et dont les extrémités libres sont reliées par lesdites tiges aux bords des goulottes.

Selon une autre caractéristique de l'invention, un bord de chaque goulotte est pourvu d'un rebord.

Selon une autre caractéristique de l'invention, elle est prévue pour pouvoir écarter au maximum les deux goulottes de manière qu'elles ne se chevauchent plus, ouvrant ainsi dans sa partie inférieure le réceptacle.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en perspective d'une mangeoire selon l'invention, ladite mangeoire étant dans sa position de faible capacité et,
la Fig. 2 est une vue en perspective d'une mangeoire selon l'invention, ladite mangeoire étant dans sa position de grande capacité,
la Fig. 3 est une vue schématique en coupe du montage d'une mangeoire selon une variante de réalisation sur le tube d'un système de distribution.

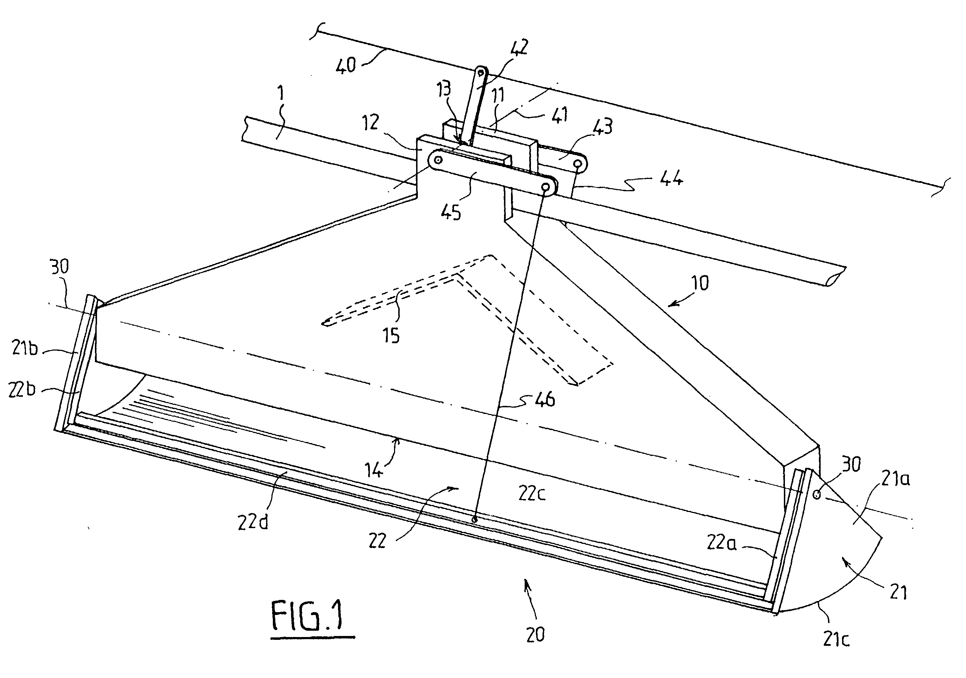

La mangeoire représentée à la Fig. 1 est essentiellement constituée d'une trémie d'alimentation 10 présentant une forme générale de V renversé. Le sommet de la trémie 10 est pourvu de deux plaques 11 et 12 servant sa fixation à un système de distribution d'aliments, par exemple constitué d'un tube 1 sensiblement horizontal dans lequel se trouve un transporteur à vis sans fin. La trémie 10 est pourvue d'une ouverture 13 par laquelle les aliments du système de distribution se déversent dans la trémie 10. Dans sa partie inférieure, la trémie 10 est pourvue d'une ouverture 14 qui s'étend sensiblement sur toute sa longueur et toute sa largeur. La trémie 10 est ainsi prévue pour déverser les aliments issus du système de distribution dans un réceptacle 20.

Le réceptacle 20 est essentiellement constitué de deux goulottes 21 et 22. La goulotte 21 est essentiellement constituée de deux parois latérales 21a et 21b présentant une forme de secteur circulaire et une paroi de fond 21c prenant appui sur les arcs des parois latérales 21a et 21b de manière à ce que la goulotte 21 présente une forme de portion de cylindre.

De même, la goulotte 22 est essentiellement constituée de deux parois latérales 22a et 22b et d'une paroi de fond 22c s'appuyant sur les bords inférieurs des parois latérales 22a et 22b de manière à ce qu'elle présente une forme de portion de cylindre.

La goulotte 22 est de dimensions telles qu'elle puisse être logée à l'intérieur de la goulotte 21, la face externe de la paroi 22c de la goulotte 22 jouxtant la face interne de la paroi 21c de la goulotte 21.

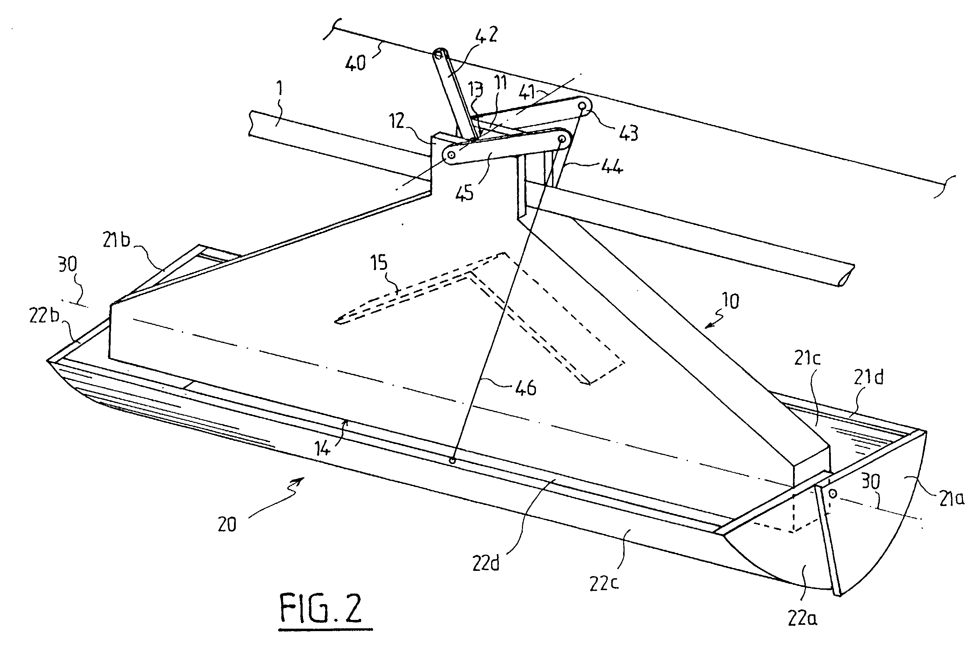

Dans leurs parties supérieures, les parois latérales 21a et 21b de la goulotte 21, ainsi que les parois latérales 22a et 22b de la goulotte 22 sont percées d'un trou prévu pour recevoir un axe 30 horizontal solidaire de la trémie 10. Chaque goulotte 21 et 22 peut ainsi pivoter librement et indépendamment de l'autre par rapport à cet axe 30 de manière à prendre une position ouverte telle que représentée à la Fig. 1 où la goulotte 22 se trouve à l'intérieur de la goulotte 21 et une position fermée représentée à la Fig. 2 dans laquelle lesdites goulottes 21 et 22 ne se chevauchent plus qu'en zone de faible dimension.

On notera que, dans la position ouverte, la capacité du réceptacle 20 est la plus faible alors que, dans la position fermée, elle est la plus élevée.

La commande d'ouverture des goulottes 21 et 22 pourrait se faire manuellement, par exemple, au moyen d'une molette montée au niveau de l'axe 30. Cependant aux Figs. 1 et 2, on a représenté un système de commande à distance.

Ce système de commande est essentiellement constitué d'un câble 40 qui court parallèlement au tube 1 du système de distribution. Entre les deux plaques 11 et 12 de la trémie 10, est monté pivotant autour d'un axe 41 perpendiculaire auxdites plaques 11 et 12, un levier 42 dont l'extrémité libre est fixée au câble 40. Extérieurement à la plaque 11, est monté solidaire de l'arbre 41, un levier 43 dont l'extrémité libre est reliée par l'intermédiaire d'une tige 44 au bord extérieur de la goulotte 21. De même à l'extérieur de la plaque 12, est monté solidaire de l'axe 41 un autre levier 45 dont l'extrémité libre est reliée par l'intermédiaire d'une tige 46 au bord de la goulotte 22.

On notera que les leviers 42, 43 et 44 constituent un système de renvoi du mouvement du câble 40 sur les bords de chaque goulotte 21, 22 et ce, par l'intermédiaire des tiges 44 et 46.

A la Fig. 2, on a tiré sur le câble 40 vers la gauche de cette Fig. 2 Il en est résulté un pivotement du levier 42 autour de l'axe 41, pivotement qui a lui-même entraîné le pivotement des leviers 43 et 45. Ces derniers pivotements ont entraîné, en tirant sur les tiges 44 et 46, le pivotement des goulottes 21 et 22 par rapport à leur axe 30. La mangeoire se retrouve ainsi dans sa position de grande capacité.

A l'intérieur de la trémie 10 se trouve une paroi 15 qui présente une forme générale d'un V renversé et servant de séparateur du flux d'aliments issu de l'entrée 13.

On notera que le bord externe de chaque goulotte 21, 22 pourrait comporter un rebord 21d et 22d, évitant aux aliments contenus dans le réceptacle 20 de déborder.

On notera que dans l'exemple de réalisation décrit chaque goulotte 21, 22 présente une forme de portion de cylindre aux parois d'extrémité planes. Cependant l'homme du métier comprendra que les parois d'extrémité pourraient également être hémisphériques et même que chacune des goulottes 21 et 22 pourraient présenter une forme d'hémisphère, dès lors que la première goulotte 21 puisse se trouver à l'intérieur de la seconde goulotte, dans une position, et, dans une autre position, qu'elles puissent ne plus se chevaucher qu'en une zone de faible dimension.

On notera également qu'en écartant au maximum les deux goulottes, elles pourraient ne plus se chevaucher du tout, ouvrant ainsi dans sa partie inférieure le réceptacle 20. Cette ouverture présente un avantage important, notamment pour le vidage et le nettoyage du réceptacle 20.

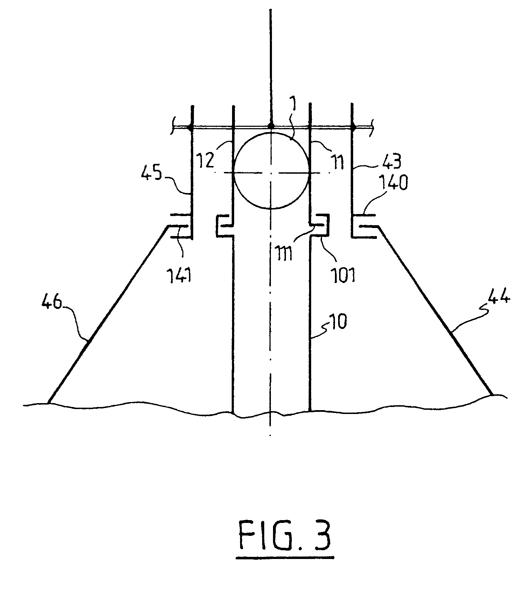

On a représenté à la Fig. 3 le montage sur un tube 1 d'un système de distribution d'une mangeoire selon une variante de réalisation de l'invention. Selon cette variante, le montage de la trémie 10 sur le tube 1 est tel que l'ensemble de la mangeoire puisse tourner autour d'un axe vertical.

Pour ce faire, le sommet de la trémie 10 comporte une rainure annulaire 101 dans laquelle vient se loger un disque 111 dont les deux plaques 11 et 12 encadrant le tube 1 sont solidaires. Par ailleurs, les bras 43 et 45 ont leurs extrémités inférieures qui sont pourvues d'une rainure annulaire 140 et les tiges 44 et 46 ont leurs extrémités supérieures qui sont reliées à anneau 141 logé dans la rainure annulaire 140.

## Revendications

1. Mangeoire pour volailles, **caractérisée en ce qu'**elle comprend un réceptacle (20) constitué de deux goulottes (21, 22) dont l'une est prévue pour pouvoir être logée à l'intérieur de l'autre goulotte, lesdites goulottes pouvant prendre l'une par rapport à l'autre toutes les positions relatives comprises entre une position où ladite première goulotte (21) se trouve à l'intérieur de la seconde goulotte (22), le réceptacle présentant sa capacité la plus faible et une autre position où lesdites goulottes (21, 22) ne se chevauchent plus qu'en une zone de faible dimension, le réceptacle présentant alors sa capacité la plus élevée.

2. Mangeoire selon la revendication 1, **caractérisée en ce que** lesdites deux goulottes (21, 22), pour pouvoir prendre lesdites positions relatives, sont prévues pour pouvoir pivoter librement l'une par rapport à l'autre et indépendamment l'une de l'autre.

3. Mangeoire selon la revendication 1 ou 2, **caractérisée en ce que** chaque goulotte (21, 22) présente une forme de portion de cylindre.

4. Mangeoire selon une des revendications précédentes, **caractérisée en ce qu'**elle comprend une trémie d'alimentation (10) présentant une forme générale de V renversé pourvue à son sommet d'une ouverture (13) par laquelle sont déversés des aliments d'un système de distribution et à sa partie inférieure, une ouverture (14) débouchant dans le réceptacle (20).

5. Mangeoire selon la revendication 4, **caractérisée en ce qu'**à l'intérieur de la trémie (10) se trouve une paroi (15) qui présente une forme générale d'un V renversé.

6. Mangeoire selon la revendication 4 ou 5, **caractérisée en ce que** le montage de la trémie d'alimentation (10) sur un tube (1) dudit système de distribution est tel que ladite mangeoire peut tourner autour d'un axe vertical.

7. Mangeoire selon l'une des revendications précédentes, **caractérisée en ce qu'**elle comporte un système de commande du pivotement des goulottes (21, 22) qui est manuel.

8. Mangeoire selon l'une des revendications 1 à 6, **caractérisée en ce qu'**elle comporte un système de commande du pivotement des mangeoires (21, 22) qui est pourvu d'un câble (40), d'un système de renvoi fixé, d'une part, au câble (40) et, d'autre part, aux bords extérieurs de chacune des goulottes (21, 22) par l'intermédiaire de tiges (44, 46).

9. Mangeoire selon la revendication 8, **caractérisée en ce que** le système de renvoi est constitué d'un premier levier (42) pouvant pivoter par rappport à un axe (41) et de deux leviers (43, 45) solidaires de l'axe (41) et dont les extrémités libres sont reliées par lesdites tiges (44, 46) aux bords des goulottes (21, 22).

10. Mangeoire selon l'une des revendications précédentes, **caractérisée en ce qu'**un bord de chaque goulotte (21, 22) est pourvu d'un rebord.

11. Mangeoire selon une des revendications précédentes, **caractérisée en ce qu'**elle est prévue pour pouvoir écarter au maximum les deux goulottes (21, 22) de manière qu'elles ne se chevauchent plus, ouvrant ainsi dans sa partie inférieure le réceptacle (20).

## Patentansprüche

1. Freßnapf für Geflügel, **gekennzeichnet durch** einen Aufnahmebehälter (20), der aus zwei Rinnen (21, 22) gebildet ist, von denen eine im Innern der anderen Rinne anordenbar ausgebildet ist, wobei die Rinnen relativ zueinander alle Relativpositionen zwischen einer Position, in der die erste Rinne (21) sich innerhalb der zweiten Rinne (22) befindet und der Aufnahmebehälter seine geringste Kapazität aufweist, und einer anderen Position, in der sich die Rinnen (21, 22) lediglich in einem Bereich geringer Abmessung überlappen und der Aufnahmebehälter seine größte Kapazität aufweist, einnehmen können.

2. Freßnapf nach Anspruch 1, **dadurch gekennzeichnet, daß** die beiden Rinnen (21, 22) so ausgestaltet sind, daß sie frei gegeneinander und unabhängig voneinander verschwenken können, um die Relativpositionen einnehmen zu können.

3. Freßnapf nach Anspruch 1 oder 2, **dadurch gekennzeichnet, daß** jede Rinne (21, 22) eine Zylinderabschnittsform aufweist.

4. Freßnapf nach einem der voranstehenden Ansprüche, **gekennzeichnet durch** einen Speisetrichter (10), der eine allgemeine Form eines umgekehrten V aufweist und an seiner Oberseite mit einer Öffnung (13) versehen ist, **durch** die Futtermittel aus einem Verteilungssystem abgelassen werden, und an seinem unteren Abschnitt mit einer Öffnung (14) versehen ist, die in den Aufnahmebehälter (20) mündet.

5. Freßnapf nach Anspruch 4, **dadurch gekennzeichnet, daß** sich im Innern des Trichters (10) eine Wandung (15) befindet, die eine allgemeine Form eines umgekehrten V darstellt.

6. Freßnapf nach Anspruch 4 oder 5, **dadurch gekennzeichnet, daß** die Anbringung des Speisetrichters (10) auf einem Rohr (1) des Verteilungssystems derart ist, daß sich der Freßnapf um eine vertikale Achse drehen kann.

7. Freßnapf nach einem der voranstehenden Ansprüche, **gekennzeichnet durch** ein manuelles Steuersystem für die Verschwenkung der Rinnen (21, 22).

8. Freßnapf nach einem der Ansprüche 1 bis 6, **gekennzeichnet durch** ein Steuersystem für die Verschwenkung der Rinnen (21, 22), das mit einem Kabel (40) und einem Rückstellsystem versehen ist, wobei das Rückstellsystem einerseits an dem Kabel (40) und andererseits mittels Stangen (44, 46) an den äußeren Rändern jeder Rinne (21, 22) befestigt ist.

9. Freßnapf nach Anspruch 8, **dadurch gekennzeichnet, daß** das Rückstellsystem aus einem um eine Achse (41) schwenkbaren ersten Hebel (42) und aus zwei fest mit der Achse (41) verbundenen Hebeln (43, 45) besteht, deren freien Enden über die Stangen (44, 46) mit den Rändern der Rinnen (21, 22) verbunden sind.

10. Freßnapf nach einem der voranstehenden Ansprüche, **dadurch gekennzeichnet, daß** ein Rand jeder Rinne (21, 22) eine Randleiste aufweist.

11. Freßnapf nach einem der voranstehenden Ansprüche, **dadurch gekennzeichnet, daß** er dahingehend ausgestaltet ist, daß sich die beiden Rinnen (21, 22) maximal spreizen können, derart daß sie sich nicht mehr überlappen und dadurch in seinem unteren Abschnitt den Aufnahmebehälter (20) öffnen.

## Claims

1. Feeder for poultry, **characterized by** including a receptacle 20 consisting of two chutes (21, 22) of which one is made to be located inside the other chute, said chutes being able to assume all positions relative to one another, between one position where said first chute (21) is inside the second chute (22), the receptacle presenting its lowest capacity and another position where said chutes (21, 22) only overlap in an area of small size, the receptacle thus presenting its highest capacity.

2. Feeder according to Claim 1, **characterized by** having said two chutes (21, 22), in order to assume their said relative positions, being made to be able to pivot freely about one another and independently of one another.

3. Feeder according to Claim 1 or 2, **characterized by** having each chute (21, 22) present the shape of a portion of a cylinder.

4. Feeder according to one of the preceding Claims, **characterized by** its including a feed hopper (10) in the general shape of an inverted V, with its top made with an opening (13) through which the feed from a distribution system is emptied and, in its lower part, an opening (14) emptying into receptacle (20).

5. Feeder according to Claim 4, **characterized by** having, inside the feed hopper (10), a wall (15) in the general shape of an inverted V.

6. Feeder according to Claim 4 or 5, **characterized by** having the assembly of the feed hopper (10) on a tube (1) of said distribution system be such that said feeder can turn about a vertical axis.

7. Feeder according to one of the preceding Claims, **characterized by** including a control system for the pivoting of the chutes (21, 22) that is manual.

8. Feeder according to Claims 1 to 6, **characterized by** including a control system for pivoting the chutes (21, 22), that is equipped with a cable (40), of a connection system that is attached on one end to the cable (40) and on the other end to the outside edges of the chutes (21, 22) though shafts (44, 46).

9. Feeder according to Claim 8, **characterized by** having the connection system consist of a first lever (42) that can pivot about a pin (41) and two levers (43, 45) integral with the pin (41), whose free ends are attached by said shafts (44, 46) to the edges of the chutes (21, 22).

10. Feeder according to one of the preceding Claims, **characterized by** having one edge of each chute (21, 22) made with a ledge.

11. Feeder according to one of the preceding Claims, **characterized by** being made so as to be able to rotate the two chutes (21, 22) away to the maximum so that they no longer overlap, thus opening the lower part of the receptacle (20).
